# EUROPEAN PATENT SPECIFICATION

(11) **EP 1 815 160 B1**
(45) Date of publication and mention of the grant of the patent: **11.01.2012**
(21) Application number: 04800166.3
(22) Date of filing: 17.11.2004
(51) Int. Cl.: F16G 5/16, B21D 53/14

(54) **PUSH BELT AND MANUFACTURING METHOD THEREFOR**
SCHUBRIEMEN UND HERSTELLUNGSVERFAHREN DAFÜR
COURROIE DE POUSSEE ET SON PROCEDE DE FABRICATION

(43) Date of publication of application: 08.08.2007
(73) Proprietor: ROBERT BOSCH GMBH, 70442 Stuttgart (DE)
(72) Inventor: CREBOLDER, Cornelia, Adriana, Elizabeth, NL-4708 NN Roosendaal (NL); TRAN, Minh, Duc, NL-5348 GC Oss (NL); PENNINGS, Bert, NL-5052 CH Goirle (NL)
(74) Representative: Plevier, Gabriel Anton Johan Maria
(86) International application number: PCT/NL2004/000774
(87) International publication number: WO 2006/054885

(56) References cited:
- EP-A- 0 950 830
- EP-A- 1 055 738
- PATENT ABSTRACTS OF JAPAN vol. 2003, no. 12, 5 December 2003 (2003-12-05) & JP 2004 315868 A (HONDA MOTOR CO LTD), 11 November 2004 (2004-11-11)
- PATENT ABSTRACTS OF JAPAN vol. 2002, no. 06, 4 June 2002 (2002-06-04) & JP 2002 060848 A (HONDA MOTOR CO LTD), 28 February 2002 (2002-02-28)
- PATENT ABSTRACTS OF JAPAN vol. 1998, no. 11, 30 September 1998 (1998-09-30) & JP 10 169719 A (NISSAN MOTOR CO LTD), 26 June 1998 (1998-06-26)
- PATENT ABSTRACTS OF JAPAN vol. 2002, no. 03, 3 April 2002 (2002-04-03) & JP 2001 329317 A (HONDA MOTOR CO LTD), 27 November 2001 (2001-11-27) cited in the application

## Description

The present invention relates to a manufacturing method for push belts, as defined by the preamble of the following claim 1, and to the product derived thereby. The push belt is mainly used as the means for power transmission between two adjustable pulleys of the well-known continuously variable transmission that is mainly applied in motor vehicles.

Such push belts are generally known and are composed of a multitude of relatively thin transverse metal elements that are slidably incorporated on one or more laminated endless tensile means that are each composed of a set of mutually nested flat metal rings, alternatively denoted bands. Such rings are produced from steel, such as maraging steel, that combines a/o the properties of great tensile strength and good resistance against tensile stress and bending fatigue with a relatively favourable possibility to process the steel from sheet material towards the desired shape and material characteristics of the end-product rings, which, preferably, should not vary along the circumference of the rings.

These desired material characteristics comprise a fair hardness of the ring core material for combining the properties of a great tensile strength together with sufficient elasticity to allow longitudinal bending of the ring and an extremely hard outer surface layer of the ring to provide wear resistance. Preferably, the outer surface layer is also provided with an residual compressive stress to provide a high resistance against metal fatigue, which is a significant feature of the rings because of the numerous number of load and bending cycles the rings are subjected to during the service lifetime of the belt.

The process steps of the general manufacturing method for such belts, at least for the tensile means thereof, as applied by Applicant for several decades now, have become well known in the art, as represented by, for example, EP 1 055 738 A2.

EP 1 055 738 A2 teaches that the rings themselves are formed out of a sheet base material, which is bent and welded into a cylindrical shape, or tube, which is heat treated, i.e. annealed, to restore the original material properties, i.e. to largely remove changes therein that were introduced by the bending and welding. The tube is than cut into a number of hoops, which are subsequently rolled and elongated to a required thickness. After rolling the hoops are usually referred to as rings or bands. The rings are subjected to a further annealing step to remove the internal stresses introduced during rolling. Thereafter, the rings are calibrated, i.e. they are mounted around two rotating rollers and stretched to a predefined circumference length. In this process step, also an internal stress distribution is imposed on the rings, which a/o defines the so-called curling radius of the ring as is explained in detail in the European patent application EP-A-1 403 551. Finally, the rings are precipitation hardened, i.e. aged, in a nitrogen-atmosphere and gas nitrided in a nitrogen- and ammonia-atmosphere, to provide additional hardness, as well as a compressive stress to the outer surface layer of the rings, which latter process step is alternatively denoted "case hardening".

From a number of these processed rings a tensile means is formed by radially nesting, i.e. placing essentially concentrically, a number of purposely selected rings, whereby only a small positive or negative play is allowed between adjacent rings of the tensile means. Hereby, such ring play may be conveniently defined as the circumference length of a radially inwardly oriented main face of the radially outer ring of a pair of adjacent rings, minus the circumference length of a radially outwardly oriented main face of the radially inner ring of such pair. Typically, the thus defined ring play varies between a couple of microns negative play to about 10 microns or so of positive play for a typical ring circumference length in the range of about 500 to 1000 mm.

To obtain the required number of rings suited for forming one tensile means, the circumference length or another representative dimensional parameter(s) of each processed ring is measured and the rings are stocked classified by such parameter(s). From such stock of classified rings, a number of suitably dimensioned rings are selected and nested concentrically to form the endless tensile means, e.g. with 9 or 12 rings, while satisfying a predefined allowed ring play between the rings of all of the pairs of adjacent rings in the endless tensile means. These latter steps in the belt manufacturing process are referred to as ring measuring and selecting and tensile means assembly. The endless tensile means is than ready for assembly into a belt, i.e. ready for being combined with the transverse elements.

It is an object of the present invention to optimise the present, long standing practice for attaining a tensile means for a push belt. One example of such optimisation is provided by the non-prepublished International patent application PCT/NL04/000357, in which it is proposed to perform the process steps of ageing and nitriding simultaneous, i.e. in the same furnace, by applying a base material that is suitable therefor. The present invention, however, realises such general object of optimisation of the tensile means manufacturing method in a different manner, i.e. by assembling the endless tensile means immediately after the process step of ring calibration and thus performing the subsequent process steps of ageing and nitriding on the tensile means as a whole. The main improvement of this new manufacturing method being a dramatic increase of the capacity of the ageing and nitriding processes, because the endless tensile means that is composed of several (usually 9 to 12) rings requires only about the same (furnace) space as one single ring.

By doing so, the present invention overcomes a wide spread prejudice that for decades has prevented the artisan from applying the above-described manufacturing method. According to this prejudice, a free flow of the medium for nitriding (e.g. gaseous NH3 and N2) around an object to be nitrided should be allowed for a uniform and reproducible case hardening result, in particular a mutual contact of the objects to be nitrided should be avoided in any case. In the present case of ring nitriding, it may indeed be considered essential that all surface parts of the rings are effectively and equally treated to avoid weaker, less hardened spots and, consequently, the presently proposed measure has always been declined in advance.

A further dissuading circumstance is the change in circumference length of the rings that is known to -unavoidably- occur during the various heat treatments. Such change may vary between the individual rings in the endless tensile means and thus disadvantageously influences the ring play between the adjacent rings. Therefore it has been the long-standing practice to first complete the heat treatment process steps in the ring manufacturing and to measure, select and radially nest the rings to form the endless tensile means only thereafter. According to the present invention, however, it appeared that the changes in circumference length might be reliably compensated for in advance when the endless tensile means is assembled, by concentrically stacking the rings with an appropriately defined ring play. Moreover, in a further elaboration of the invention below, these naturally occurring changes are, surprisingly, even exploited to improve the service lifetime of the belt.

During the past decades, it has for either one or for both of the above reasons apparently been conceived that it is a prerequisite to manufacture belts, i.e. the endless tensile means thereof, departing from rings that are measured and selected for this purposes only after they have been subjected to all of the required process steps, including the heat treatments of ageing and nitriding. This prejudice is illustrated by the fact that, according to Applicant's knowledge, all belt manufacturers apply this latter conventional method even though the advantages of the presently claimed method are immediately obvious.

An arbitrary example of the existing practice and belief is provided by the Japanese publication JP-2001-329317, which discloses a ring heat treatment process, in particular, a ring carrying tray to be used in such process. Although each such tray is loaded by two, mutually concentrically arranged rings, the latter are not adjacent rings of the endless tensile means. In fact mutual contact is avoided, by combining two rings of sufficiently differing diameter, e.g. ring numbers 1 and 7 of an endless tensile means composed of 12 rings, thus leaving out the five ring numbers 2 to 6 that would be present between rings 1 and 7 in the final endless tensile means. Accordingly, a large radial gap is created between the rings that are loaded on the same tray, which gap amounts to more than five times the thickness of the ring. JP-2001-329317 thus deters the artisan from heat treating the endless tensile means as a whole, by implying that a considerable radial gap between the rings thereof is required for properly performing any heat treating process such as annealing, hardening or nitriding.

In the new manufacturing process according to the invention, the ring calibration process is preferably set-up such that the individual rings are stretched to a well defined circumference length, which is, however, made to change from one ring to the other. Preferably, in such a manner that the rings that are subsequently calibrated can be immediately placed concentrically around one another, i.e. radially nested, while satisfying the said predefined ring play there between, to form the endless tensile means. Hereby, the process step of ring measuring and selecting may be obviated and the complexity of the overall manufacturing method is thus favourably reduced and its efficiency significantly improved.

The results of experiments with endless tensile means composed of 12 rings -a commonly found maximum in number of rings per package-, wherein the process settings such as furnace temperature and atmospheric compositions were maintained identical to the conventional process wherein the rings are treated individually, show only a small reduction of the hardness of and nitride concentration in the ring faces facing the inside of the endless tensile means, i.e. facing another, adjacent ring -denoted the inside faces of the endless tensile means-, whereas those ring faces that face radially outward from the endless tensile means -denoted the outside faces of the endless tensile means- remained unchanged. Also the depth of the resulting nitride layer was found to be essentially equal to that of individually treated rings. Finally, it was observed that the circumference length of the radially innermost and outermost rings of the endless tensile means expanded somewhat relative to the in-between rings.

In relation to the hardness reduction of the inside faces it is remarked that such has been found to be entirely acceptable. Where before the ring surface hardness was determined with a view to wear in the ring to element contact, such hardness was automatically set as a standard for each of the rings in the endless tensile means. Given the nature of the known manufacturing method, all rings are subjected to the same process steps and the same process settings. However, it is now conceived that as long as the surface hardness of mutually contacting ring faces in the endless tensile means, i.e. the inside faces, are to a large extend comparable, which is the case with the manufacturing method according to the present invention, a considerably lower hardness level can be accepted in the ring to ring contact, while maintaining an acceptable wear resistance. For this reason the present invention in fact is also considered to be the invention of a push belt whereof the hardness of the outside ring surfaces that contact and interact with the transverse element of the belt is greater than that of the inside ring surfaces that contact each other.

In relation to the slight length-wise expansion of the radially innermost and outermost rings of the endless tensile means relative to the in-between rings, it is remarked that such may be compensated for beforehand, by an appropriate adaptation of the said predefined ring play. In practice this would result in a pre-defined ring play between the innermost ring and the immediately adjacent one that is slightly increased relative to the play between the inside rings of the endless tensile means and a pre-defined ring play between the outermost ring and the immediately adjacent one that is slightly decreased relative thereto. Numerically speaking such relative expansion of the radially innermost and outermost rings amounts to about 0.002 - 0.02% of their respective circumference length.

It is, however, also remarked that the particular differences in length-wise expansion obtained with the manufacturing method according to the invention, in fact represent a surprisingly favourable manner of realising a belt with relatively increased service lifetime of the endless tensile means component thereof, for the reasons set out in the European patent application EP-A-1 216 366 in the name of Applicant. It may thus also be opted not to adapt the predefined ring play between pair of adjacent rings, but rather to apply constant, appropriately defined play between the adjacent rings in the endless tensile means.

Further it is remarked that before, in the conventional ageing and nitriding processes, the rings are individually mounted in an oven rack (see e.g. JP-2001-329317) in order to effectively use of the furnace and also because otherwise the rings could be easily damaged by contacting other rings and/or furnace walls. The rings thus have to be handled quite extensively and delicately and, moreover, are processed semi-batchwise. The present invention, however, allows and proposes the use of a conveyer for the continuous transport of endless tensile means through the nitriding and/or ageing furnace(s). Such conveyer preferably comprises a discontinuous carrier means, such as a continuous mesh, a perforated belt or an array of cylindrical rollers, to allow the nitriding atmosphere to reaching the underside of the endless tensile means that is freely placed thereon. According to the invention, such new handling method becomes possible, because the endless tensile means is considerably more robust compared to an individual ring and because by applying the manufacturing method according to the invention, the heat treatments of ageing and nitriding are performed much more effectively anyway.

The above-described basic features of the invention will now be elucidated by way of example, along a drawing in which:
figure 1 figuratively represents the known manufacturing method;
figure 2 in a corresponding manner represents the optimised, new manufacturing method in accordance with the invention; and
figure 3 illustrates in a cross-section an endless tensile means composed of a number of rings adapted to and manufactured by the manufacturing method according to the present invention.

In the drawings, the separate process steps of the known and the new manufacturing method are indicated by way of Roman numerals.

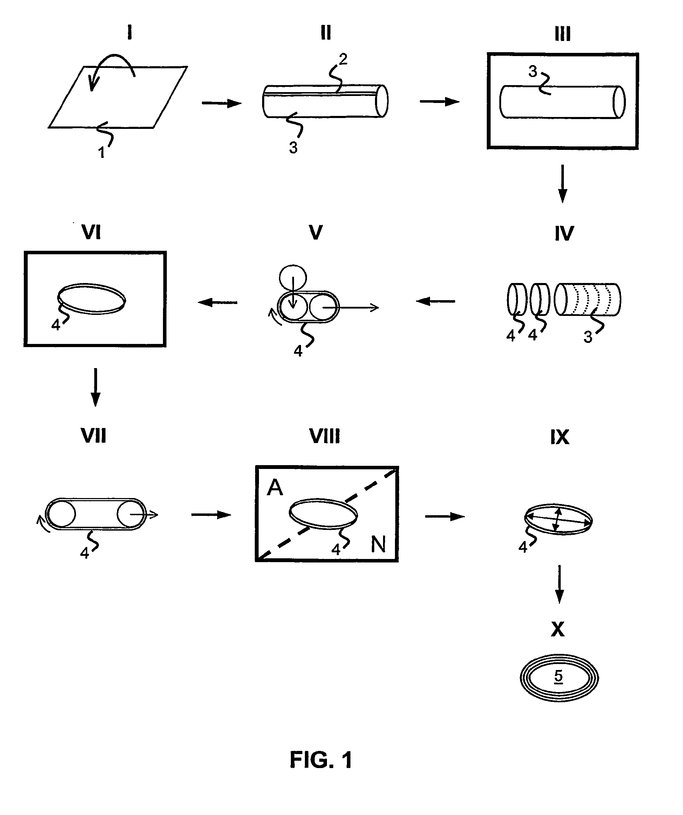

Figure 1 illustrates the presently relevant part of the known manufacturing method as is practised since the early years of metal push belt production. In a first process step I a sheet of base material 1 is bent into a cylindrical shape, whereby the sheet ends 2 that meet each other are welded together in a second process step II to form a tube 3. In a third step III of the process the tube 3 is annealed. Thereafter, in a fourth process step IV the tube 3 is cut into a number of hoops 4, which are subsequently -process step five V- rolled and elongated to a required thickness, which is typically about 0.185 mm in the end product. After rolling the hoops 4 are usually referred to as rings 4.

The rings 4 are subjected to a further annealing process step VI to remove the internal stresses introduced during rolling. Thereafter, in a seventh process step VII, the rings 4 are calibrated, i.e. they are mounted around two rotating rollers and stretched to a predefined circumference length. In this seventh process step VII, also an internal stress distribution is imposed on the rings 4, which defines the so-called curling radius of the respective ring 4. In the eighth step VIII of the known process the rings 4 undergo two heat treatments, either subsequently or simultaneously. Firstly, the rings 4 are precipitation hardened, i.e. aged, in a nitrogen-atmosphere (process step VIII-A) and, secondly, the rings 4 are nitrided in a nitrogen- and ammonia-atmosphere (process step VIII-B), to provide additional hardness, as well as a compressive stress to the outer surface layer of the rings 4. This latter treatment VIII-B is known as a gas soft nitriding process and provides a case hardening of the rings 4, whereby a diffusion nitrided surface layer of typically 25-35 microns of extreme hardness is formed.

From a number of these processed rings 4 a tensile means 5 is formed by radially stacking, i.e. nesting, a number of purposely selected rings 4. To obtain the required number of rings 4 suited for forming one tensile means 5, a representative dimension of each processed ring 4, e.g. its circumference length, is measured in a ninth process step IX, whereby the rings 4 are stocked classified by such length. Subsequently, in a tenth and final process step X the endless tensile means 5 is assembled by radially nesting a number of suitably dimensioned rings 4 from such stock of classified rings 4.

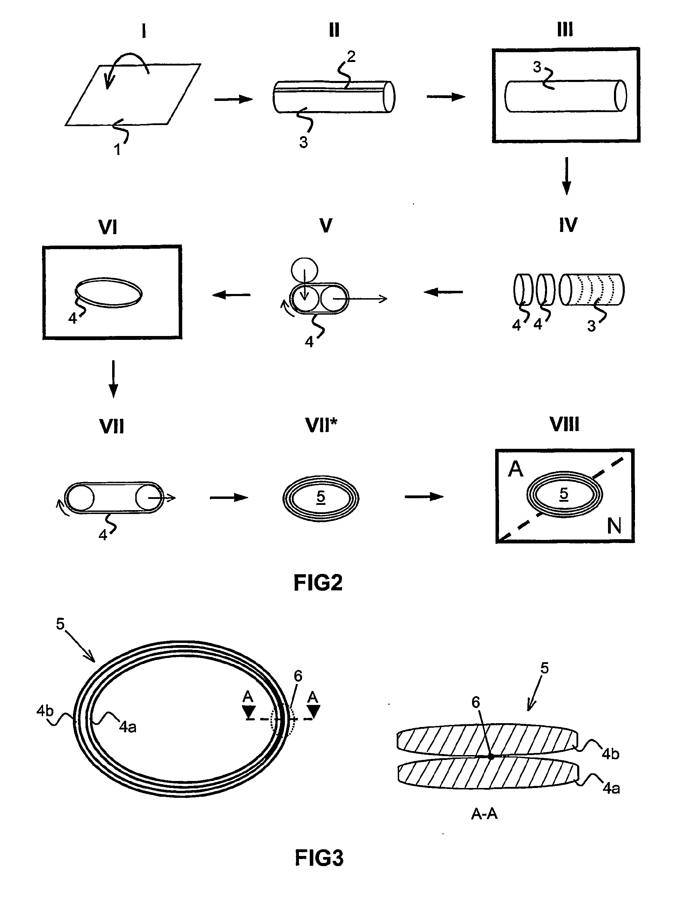

Now according to the invention this known method of figure 1 may be significantly simplified, which simplified new manufacturing method is figuratively illustrated in figure 2. In the manufacturing method according to the present invention, the endless tensile means 5 is assembled by radially nesting a desired number of rings 4 of suitable circumference length in an intermediate process step VII* immediately after the seventh process step VII of ring calibration, whereby the preceding process step I-VI may be executed in the above-discussed conventional manner. This new, intermediate process step VII* thus replaces the former tenth process step X and results in the eighth process step VIII the said heat treatments of ageing (process step VIII-A) and nitriding (process step VIII-B) being performed on the endless tensile means 5 as a whole.

The main improvement of this new manufacturing method being a dramatic increase of the capacity of the ageing and nitriding processes, because the endless tensile means 5 that is composed of several (usually 9 to 12) rings 4 requires only about the same (furnace) space as one single ring 4. Moreover, the ring calibration process VII may be arranged and performed such that the rings 4 are accurately stretched to a specific circumference length, which is defined such that each subsequently calibrated ring 4 may be used either to start a new endless tensile means 5 to be assembled, or to add it to an already partially completed endless tensile means 5. Hereby, also the process step of ring measuring and selecting (former process step IX) favourably becomes superfluous.

It is hypothesised that a slightly convex cross sectional shape of the rings 4 such that they are at least effectively barrel shaped, which convex shape is generally applied in push belts of current design, is at least partly responsible for the surprising experimental results that are the basis of the present invention. Inter alia, such barrel shape and the dimensions and function thereof are described in the European patent application EP-A-0 950 830 and is illustrated here in figure 3.

From figure 3 it appears that when a ring 4a of the endless tensile means 5 is not positioned exactly concentrically relative to an adjacent ring 4b, or when a ring 4 is deformed relative to an adjacent ring 4 (e.g. shaped less circular, i.e. elliptically), such adjacent rings 4a, 4b may contact, thereby preventing, or at least impeding, the nitriding atmosphere from reaching the contact area 6. However, in case of effectively barrel-shaped rings 4, i.e. rings 4 in a longitudinal cross section having a centrally located section that is thicker than lateral end sections thereof, such contact area 6 remains very limited and in essence only point contact is created between the rings 4a, 4b. Apparently such limited contact area 6 allows a sufficient supply of fresh nitriding gas to the outer surfaces of the rings 4a, 4b during the nitriding heat treatment and thus provides a proper nitriding thereof.

## Claims

1. Method for manufacturing a push belt for a continuously variable transmission composed of a multitude of relatively thin transverse metal elements that are slidably incorporated on one or more laminated endless tensile means (5) that are each composed of a set of mutually nested flat metal rings (4), **characterised in that**, the method comprises the process step of nitriding the endless tensile means (5) as a whole in an atmosphere containing gaseous ammonia (NH3).

2. Manufacturing method according to claim 1, **characterised in that**, the rings (4) are made from a maraging steel and the method further comprises the process step of ageing the endless tensile means (5) in an atmosphere containing nitrogen (N2), which process step of aging is preferably performed simultaneously with the process step of nitriding.

3. Manufacturing method according to claim 1 or 2, **characterised in that**, preceding the said process step of nitriding the individual rings (4) of the endless tensile means (5) are sequentially calibrated towards a predefined circumference length and, thereafter, are placed mutually essentially concentrically to form the endless tensile means (5).

4. Manufacturing method according to claim 3, **characterised in that**, the said predefined circumference length of the individual rings (4) of the endless tensile means (5) increases, respectively decreases, stepwise by an essentially constant amount for subsequent rings (4) of the endless tensile means (5), whereby a play between the rings (4) of each pair of adjacent rings (4) in the endless tensile means (5) is essentially the same for all pairs of adjacent rings (4).

5. Manufacturing method according to claim 3, **characterised in that**, the said predefined circumference length of the individual rings (4) of the endless tensile means (5) is set such that a play between the rings (4) of an innermost pair of adjacent rings (4) of the endless tensile means (5) is larger and/or that the corresponding play between the rings (4) of an outermost pair of adjacent rings (4) of the endless tensile means (5) is smaller relative to the corresponding play between the other pairs of adjacent rings (4) of the endless tensile means (5).

6. Manufacturing method according to any of the preceding claims, **characterised in that**, at least one of a radially inwardly oriented main face and a radially outwardly oriented main face of the rings (4) of the endless tensile means (5) in a longitudinal cross-section is shaped effectively and at least slightly convex.

7. Manufacturing method according to any of the preceding claims, **characterised in that**, the endless tensile means (5) is continuously transported through a nitriding furnace on a conveyer.

8. Push belt for a continuously variable transmission, in particular produced by the manufacturing method according to any of the preceding claims, composed of a multitude of relatively thin transverse metal elements that are slidably incorporated on one or more laminated endless tensile means (5) that are each composed of a set of mutually nested flat metal rings (4), **characterised in that**, the surface hardness of the radially inwardly oriented main face of the innermost ring (4) of the endless tensile means (5) and the surface hardness of the radially outwardly oriented main face of the outermost ring (4) of the endless tensile means (5) is set to a significantly higher level than that of the radially oriented main faces of the other, in-between rings (4) of the endless tensile means (5).

## Patentansprüche

1. Verfahren zur Herstellung eines Schubriemens für ein stufenloses Getriebe, der aus einer Vielzahl von relativ dünnen Quermetallelementen besteht, die auf einem oder mehreren laminierten Endloszugmitteln (5), die jeweils aus einem Satz ineinander verschachtelter flacher Metallringe (4) bestehen, verschiebbar integriert sind, **dadurch gekennzeichnet, dass** das Verfahren den Prozessschritt des Nitrierens des Endloszugmittels (5) als Ganzes in einer gasförmiges Ammoniak (NH3) haltigen Atmosphäre umfasst.

2. Herstellungsverfahren nach Anspruch 1, **dadurch gekennzeichnet, dass** die Ringe (4) aus einem Maraging-Stahl bestehen und das Verfahren weiterhin den Prozessschritt des Alterns des Endloszugmittels (5) in einer Stickstoff (N2) haltigen Atmosphäre umfasst, wobei der Prozessschritt des Alterns vorzugsweise gleichzeitig mit dem Prozessschritt des Nitrierens durchgeführt wird.

3. Herstellungsverfahren nach Anspruch 1 oder 2, **dadurch gekennzeichnet, dass** vor dem Prozessschritt des Nitrierens die einzelnen Ringe (4) des Endloszugmittels (5) nacheinander auf eine vordefinierte Umfangslänge kalibriert werden und danach im Wesentlichen konzentrisch zueinander platziert werden, um das Endloszugmittel (5) zu bilden.

4. Herstellungsverfahren nach Anspruch 3, **dadurch gekennzeichnet, dass** die vordefinierte Umfangslänge der einzelnen Ringe (4) des Endloszugmittels (5) um ein im Wesentlichen konstantes Maß für nachfolgende Ringe (4) des Endloszugmittels (5) stufenweise zunimmt bzw. abnimmt, wodurch ein Spiel zwischen den Ringen (4) jedes Paars benachbarter Ringe (4) in dem Endloszugmittel (5) für alle Paare benachbarter Ringe (4) im Wesentlichen gleich ist.

5. Herstellungsverfahren nach Anspruch 3, **dadurch gekennzeichnet, dass** die vordefinierte Umfangslänge der einzelnen Ringe (4) des Endloszugmittels (5) so eingestellt ist, dass ein Spiel zwischen den Ringen (4) eines innersten Paares benachbarter Ringe (4) des Endloszugmittels (5) größer und/oder dass das entsprechende Spiel zwischen den Ringen (4) eines äußersten Paars benachbarter Ringe (4) des Endloszugmittels (5) kleiner bezüglich des entsprechenden Spiels zwischen den anderen Paaren benachbarter Ringe (4) des Endloszugmittels (5) ist.

6. Herstellungsverfahren nach einem der vorhergehenden Ansprüche, **dadurch gekennzeichnet, dass** eine radial nach innen ausgerichtete Hauptfläche und/oder eine radial nach außen ausgerichtete Hauptfläche der Ringe (4) des Endloszugmittels (5) in einem Längsquerschnitt wirksam geformt und mindestens etwas konvex ist.

7. Herstellungsverfahren nach einem der vorhergehenden Ansprüche, **dadurch gekennzeichnet, dass** das Endloszugmittel (5) auf einer Fördereinrichtung kontinuierlich durch einen Nitrierofen befördert wird.

8. Schubriemen für ein stufenloses Getriebe, der insbesondere durch das Herstellungsverfahren nach einem der vorhergehenden Ansprüche hergestellt ist und aus einer Vielzahl von relativ dünnen Quermetallelementen besteht, die auf einem oder mehreren laminierten Endloszugmitteln (5), die jeweils aus einem Satz ineinander verschachtelter flacher Metallringe (4) bestehen, verschiebbar integriert sind, **dadurch gekennzeichnet, dass** die Oberflächenhärte der radial nach innen ausgerichteten Hauptfläche des innersten Rings (4) des Endloszugmittels (5) und die Oberflächenhärte der radial nach außen ausgerichteten Hauptfläche des äußersten Rings (4) des Endloszugmittels (5) auf einen bedeutend höheren Wert eingestellt ist als der der radial ausgerichteten Hauptflächen der anderen, dazwischen liegenden Ringe (4) des Endloszugmittels (5).

## Revendications

1. Procédé de fabrication d'une courroie de poussée pour une transmission à variation continue composée d'une multitude d'éléments métalliques transversaux relativement minces qui sont incorporés de façon coulissante sur un ou plusieurs moyen(s) de tension sans fin stratifié(s) (5) qui sont chacun composés d'un ensemble d'anneaux métalliques plats mutuellement emboîtés (4), **caractérisé en ce que** le procédé comprend l'étape de traitement de nitruration des moyens de tension sans fin (5) comme un ensemble dans une atmosphère contenant de l'ammoniac gazeux (NH₃).

2. Procédé de fabrication selon la revendication 1, **caractérisé en ce que** les anneaux (4) sont constitués d'un acier maraging, et le procédé comprend en outre l'étape de traitement de vieillissement des moyens de tension sans fin (5) dans une atmosphère contenant de l'azote (N₂), ladite étape de traitement de vieillissement étant de préférence exécutée simultanément à l'étape de traitement de nitruration.

3. Procédé de fabrication selon la revendication 1 ou 2, **caractérisé en ce que**, avant ladite étape de traitement de nitruration, les anneaux individuels (4) des moyens de tension sans fin (5) sont calibrés de façon séquentielle vers une longueur circonférentielle prédéfinie et, ensuite, sont placés mutuellement de façon essentiellement concentrique pour former les moyens de tension sans fin (5).

4. Procédé de fabrication selon la revendication 3, **caractérisé en ce que** ladite longueur circonférentielle prédéfinie des anneaux individuels (4) des moyens de tension sans fin (5) augmente, respectivement diminue, par paliers d'une quantité essentiellement constante pour les anneaux suivants (4) des moyens de tension sans fin (5), dans lequel un jeu entre les anneaux (4) de chaque paire d'anneaux voisins (4) dans les moyens de tension sans fin (5) est essentiellement le même pour toutes les paires d'anneaux voisins (4).

5. Procédé de fabrication selon la revendication 3, **caractérisé en ce que** ladite longueur circonférentielle prédéfinie des anneaux individuels (4) des moyens de tension sans fin (5) est réglée de telle sorte qu'un jeu entre les anneaux (4) d'une paire intérieure extrême d'anneaux voisins (4) des moyens de tension sans fin (5) soit plus grand et/ou que le jeu correspondant entre les anneaux (4) d'une paire extérieure extrême d'anneaux voisins (4) des moyens de tension sans fin (5) soit plus petit que le jeu correspondant entre les autres paires d'anneaux voisins (4) des moyens de tension sans fin (5).

6. Procédé de fabrication selon l'une quelconque des revendications précédentes, **caractérisé en ce qu'**au moins soit une face principale orientée radialement vers l'intérieur, soit une face principale orientée radialement vers l'extérieur des anneaux (4) des moyens de tension sans fin (5) dans une section longitudinale est configurée efficacement et de façon au moins légèrement convexe.

7. Procédé de fabrication selon l'une quelconque des revendications précédentes, **caractérisé en ce que** les moyens de tension sans fin (5) sont transportés de façon continue à travers un four de nitruration sur un transporteur.

8. Courroie de poussée pour une transmission à variation continue, en particulier produite par le procédé de fabrication selon l'une quelconque des revendications précédentes, composée d'une multitude d'éléments métalliques transversaux relativement minces qui sont incorporés de façon coulissante sur un ou plusieurs moyen(s) de tension sans fin stratifié(s) (5) qui sont chacun composés d'un ensemble d'anneaux métalliques plats mutuellement emboîtés (4), **caractérisée en ce que** la dureté de surface de la face principale orientée radialement vers l'intérieur de l'anneau intérieur extrême (4) des moyens de tension sans fin (5) et la dureté de surface de la face principale orientée radialement vers l'extérieur de l'anneau extérieur extrême (4) des moyens de tension sans fin (5) sont réglées à un niveau nettement plus élevé que celui des faces principales orientées radialement des autres anneaux intermédiaires (4) des moyens de tension sans fin (5).
